## Europäisches Patentamt

## European Patent Office

## Office européen des brevets

(19)

(11) Veröffentlichungsnummer: **0 207 320**
**B1**

(12) **EUROPÄISCHE PATENTSCHRIFT**

(45) Veröffentlichungstag der Patentschrift:
09.05.90

(51) Int. Cl.⁵: **G07F 7/10**

(21) Anmeldenummer: 86107619.8

(22) Anmeldetag: 04.06.86

(54) Integrierte Schaltung und Verfahren zum Sichern von geheimen Codedaten.

(30) Priorität: 03.07.85 DE 3523842

(43) Veröffentlichungstag der Anmeldung:
07.01.87 Patentblatt 87/2

(45) Bekanntmachung des Hinweises auf die Patenterteilung:
09.05.90 Patentblatt 90/19

(84) Benannte Vertragsstaaten:
AT CH DE FR GB IT LI NL SE

(56) Entgegenhaltungen:
FR-A- 2 471 000
FR-A- 2 471 003
FR-A- 2 513 408

IBM TECHNICAL DISCLOSURE BULLETIN, Band 23,
Nr. 2, Juli 1980, Seiten 673-675, Armonk, New York, US;
P. ABRAMSON et al.: "Identification card"

(73) Patentinhaber: Siemens Aktiengesellschaft,
Wittelsbacherplatz 2, D-8000 München 2(DE)

(72) Erfinder: Schrenk, Hartmut, Dr., Phys., Fasanenweg 22,
D-8013 Haar(DE)

## Beschreibung

Die Erfindung betrifft ein Verfahren zum Sichern von in einem Datenspeicher abgelegten geheimen Codedaten vor einer Analyse, bei welcher aus den Signalen an den Speicherausgängen auf den Speicherinhalt geschlossen werden kann, und eine integrierte Schaltung mit einem Datenspeicher zur Durchführung des Verfahrens.

Eine derartige integrierte Schaltung stellt ein wesentliches Element einer sogenannten Chip-Karte dar, die in Sicherheits- und Zugriffssystemen, in Abrechnungs- oder Registriersystemen und in Debit- und Kreditsystemen eingesetzt werden kann. Auf die integrierte Schaltung und den Datenspeicher wird über elektrische Außenkontakte auf der Kartenoberfläche in einem Kartenlesegerät zugegriffen.

In vielen Anwendungsfällen sind auf den Karten Speicherdaten abgelegt, die als Geheimcode zur Identifikation oder Authentifikation des Kartenbenutzers oder der Karte verwendet werden. Die Systemsicherheit hängt davon ab, wie gut diese Daten gegen eine mißbräuchliche Analyse geschützt werden. Deshalb werden an die Betrugssicherheit der Karten und Lesegeräte sehr hohe Anforderungen gestellt. Aufgrund der dem heutigen Erfahrungsstand entsprechenden Sicherheitsvorkehrungen hat jedoch ein direkter Analyseversuch des Inhalts des Datenspeichers, der in der Regel aus einem $E^2$-PROM-Speicher besteht, kaum Aussicht auf Erfolg. Es könnte jedoch der Versuch gemacht werden, aus dem Einfluß der Speicherdaten auf die Speicherausgänge bzw. auf die angeschlossene Peripherielogik Rückschlüsse auf diese Speicherdaten zu ziehen.

Aus der FR-AI 2 471 003 ist ein System, bestehend aus einem eine elektronische Schaltung mit nichtflüchtigem Speicher enthaltenden tragbaren Objekt und einem eine elektronische Schaltung enthaltenden Lesegerät, bekannt, wobei dadurch, daß die Zeit des Datenaustausches zwischen dem tragbaren Objekt und dem Lesegerät auf einen systemabhängigen minimal erforderlichen Zeitraum reduziert wird, verhindert werden soll, daß durch Zwischenschalten eines Mikroprozessors die ausgetauschten Daten ausgewertet werden können. Hierbei sind Mittel vorgesehen, die einen Zugriff vorübergehend oder endgültig verhindern, wenn die Datenaustauschzeit einen bestimmten Wert übersteigt. Ein Lesen der zwischen tragbarem Objekt und Lesegerät ausgetauschten Daten wird hierbei nicht verhindert oder erschwert.

Der Erfindung lag daher die Aufgabe zugrunde, eine integrierte Schaltung und ein Verfahren der oben genannten Art anzugeben, bei welchen verhindert wird, daß aus dem Einfluß der Speicherdaten auf eine Peripherielogik Rückschlüsse auf den Speicherinhalt gezogen werden können.

Diese Aufgabe wird gemäß dem kennzeichnenden Teil des Anspruchs 1 bzw. 10 gelöst.

Weiterbildungen der Erfindung ergeben sich aus den Unteransprüchen.

Die Erfindung beruht darauf, daß die Ausgänge der Speicherzellen, in der Regel die Spaltenleitungen des Speicherfeldes, im Normalzustand gegenüber der Peripherielogik gesperrt sind. Die Sperre wird nur für einen kurzen Zeitraum aufgehoben, in dem die Geheimdaten in der Peripherielogik tatsächlich für den Datenvergleich benötigt werden. Die Zeit, in der eine Analyse durchgeführt werden könnte, ist daher auf eine kurze Zeitspanne von beispielsweise wenigen Mikrosekunden begrenzt.

Vorzugsweise sind die zu schützenden Ausgangsleitungen auf ein definiertes Potential und unabhängig von der gespeicherten Information geschaltet. Die Sicherheit der Schaltung kann gemäß einer Weiterbildung der Erfindung weiter dadurch erhöht werden, daß der Anfang der Zugriffszeit nach außen nicht erkennbar festgelegt ist. Somit ist es nahezu unmöglich, die kurze Zugriffszeit auszunutzen. Eine bevorzugte Maßnahme dafür besteht darin, über einen chipinternen Zufallsgenerator, der in Verbindung mit einer Zählvorrichtung die statistische Variation des Anfangszeitpunktes ermöglicht, festzulegen.

Um die Anzahl möglicher Analyseversuche weiter einzugrenzen, wird der Beginn eines Speicherzugriffs durch einen Schreibvorgang in einem Zählspeicher eingeleitet, der gemeinsam mit dem betreffenden Codewort adressiert wird. Jeder Zugriff verbraucht ein Bit des Zählspeichers. Die Anzahl dieser Zählbits legt die Anzahl der zulässigen Versuche fest. Der Zählspeicher übernimmt damit die Rolle eines codespezifischen zugeordneten Zählers, bei dessen Überlauf nicht nur die Karte blockiert wird, sondern gleichzeitig auch jede Analysemöglichkeit aufgehoben ist.

Nach der Beendigung des Schreibvorgangs im Zählspeicher wird nicht nur die Zugriffssperre zu den Geheimdaten aufgehoben, sondern gleichzeitig eine Zeitstufe angestoßen, die vorzugsweise aus einer monostabilen Kippstufe besteht, deren Rückflanke das Ende des verfügbaren Zeitintervalls für den Codevergleich bedeutet. Um eine betrügerische Manipulation vollgeschriebener Zellspeicher zu verhindern, ist es zweckmäßig und erfindungsgemäß, daß der geschriebene Zustand dem Neutralzustand des Speichers entspricht. Um die Zugriffsperre nur auf diejenigen Speicheradressen zu beschränken, die tatsächlich geheime Codedaten enthalten, kann erfindungsgemäß ein weiterer Speicher als Kennspeicher vorhanden sein.

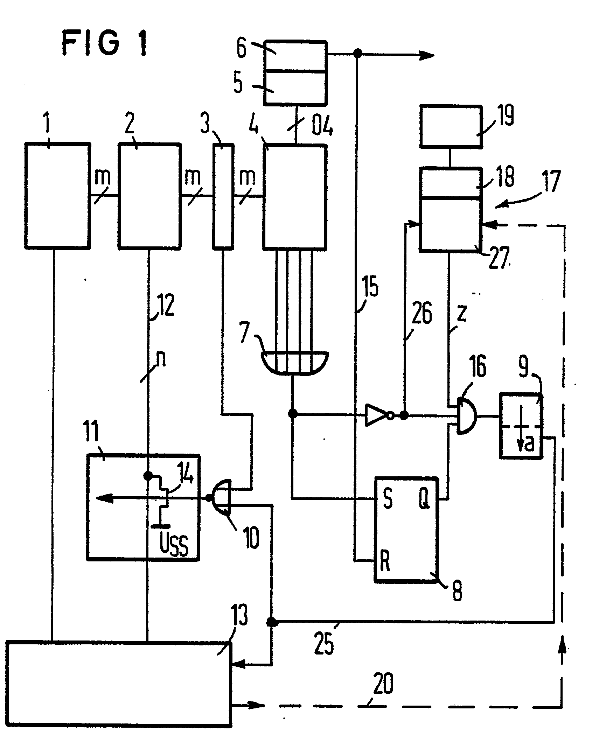

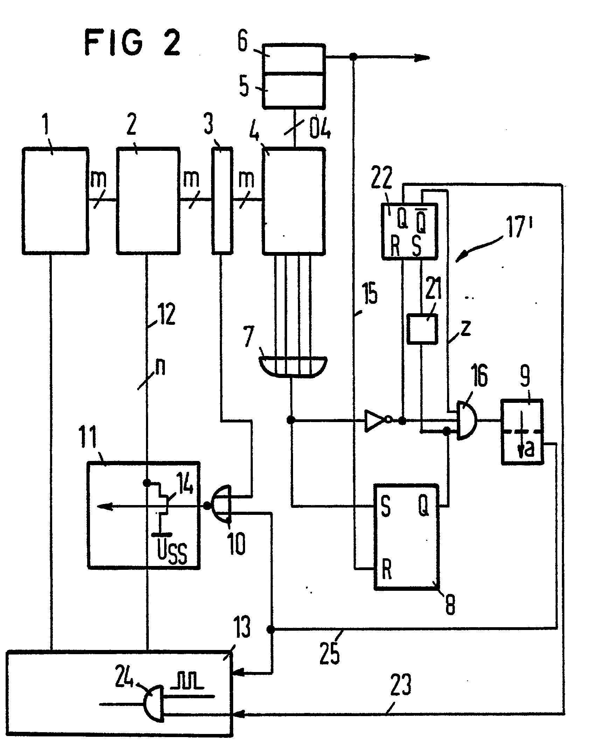

Im folgenden wird die Erfindung anhand von zwei in zwei Figuren 1 und 2 dargestellten Ausführungsbeispielen weiter beschrieben.

Wie die Figur 1 zeigt, weist die integrierte Schaltung einen Adreßdekoder 1, einen Datenspeicher 2, einen Kennspeicher 3 und einen Zählspeicher 4 auf.

Alle Speicher sind parallel über m Adreßleitungen vom Adreßdekoder 1 adressierbar. Des weiteren liegt am Zählspeicher 4 über einen Bit-Dekoder 5 ein Adreßzähler 6. Der Ausgang des Zählspeichers 4 ist über ein Oder-Glied 7 mit einer Kippstufe 8 und einer Zeitstufe 9 verbunden. Die Ausgänge des Kennspeichers 3 und der Zeitstufe 9 liegen über ein NOR-Glied 10 am Steuereingang einer Zugriffssperre 11, die in die Datenausgangsleitungen 12 des Speichers 2 geschaltet ist. Um die Darstellung zu vereinfachen, ist lediglich eine von n Spaltenleitungen des Datenspeichers 2 und die zugehörige Sperranordnung in der Figur wiedergegeben. Mit 13 ist eine Peripherielogik mit einer Speicheransteuerung und eine Komparatorlogik bezeichnet, deren Aufbau und Funktion allgemein bekannt sind.

Jeder Adresse des Datenspeichers 2 ist eine Adresse bzw. ein Speicherplatz des Kennspeichers 3 und des Zählspeichers 4 fest zugeordnet. Über den Kennspeicher 3 ist festgelegt, ob die zugehörigen Daten im Speicher 2 geschützt oder ungeschützt sind. In dem wiedergegebenen Beispiel, in welchem der Kennspeicher 3 ein Bit breit ist, bedeutet eine Ausgangsspannung von logisch 1, daß der zugehörige Speicherbereich nicht geschützt ist. Eine Ausgangsspannung von logisch 0 kennzeichnet einen geschützten Speicherbereich des Datenspeichers 2, in dem geheimzuhaltende Codedaten abgelegt sind.

Die Wortbreite des nichtflüchtigen E²-Prom-Zählspeichers 4 legt die Anzahl der zulässigen Zugriffe bzw. Zugriffsversuche auf einen Speicherplatz des den Speichers 2 fest. In dem wiedergegebenen Beispiel ist jeder unter einer Adresse ansprechbare Speicherplatz vier Bits breit. Jeder Speicherzugriff verbraucht ein Bit des Zählspeichers 4. Nur wenn bei einem Zugriff ein korrekter Datenvergleich durchgeführt und damit Freigabe erreicht ist, können die geschriebenen Zählerbits wieder gelöscht werden. Bei Überlauf des Speichers, hier nach vier Zugriffsversuchen, ist der zugehörige Speicherplatz im Datenspeicher 2 blockiert. Gleichzeitig ist jede Analysemöglichkeit aufgehoben, wie aus der folgenden Beschreibung noch entnehmbar ist.

Die in den Zählspeicher 4 einzuschreibenden Bits werden über den Bit-Dekoder 5 vom Adreßzähler 6 abgeleitet.

Damit für die Anordnung ein sicherer Ausgangszustand vorgegeben ist, bewirkt der neutrale Zählspeicher, d. h. der Zählspeicher, an welchem noch keine Schreiboperationen vorgenommen sind, ein Sperren der Sperrvorrichtung 11. In dem wiedergegebenen Beispiel ist dieser neutrale Zustand durch einen log-0-Inhalt gekennzeichnet. Die Kombination 0-0-1-1 bedeutet beispielsweise, daß auf den zugehörigen Speicherplatz des Datenspeichers 2 zwei Zugangsversuche unternommen wurden. Liegt beispielsweise ein Speicherinhalt 0-0-0-0 vor, so wurde bereits viermal auf den zugehörigen Code-Bereich zugegriffen. Da der Zählspeicher somit vollgeschrieben ist, ist es nicht mehr möglich, die Zeitstufe 9 zu triggern.

Im folgenden wird die Funktion der Anordnung unter der Annahme beschrieben, daß die im Datenspeicher 2 angesprochene Adresse eine zu schützende, geheime Codeinformation enthält. Die gewünschte Adresse gelangt von der Peripherielogik und der Speicheransteuerung 13 auf den Adreßdekoder 1, über der gleichzeitig der betreffende Speicherplatz im Datenspeicher 2, im Kennspeicher 3 und im Zählspeicher 4 adressiert werden. Da es sich voraussetzungsgemäß um geheime Daten handelt, ist der betreffende Speicherplatz im Kennspeicher 3 mit log-0 markiert. Dieser Pegel liegt eingangsseitig am NOR-Gatter 10 an, so daß dessen Ausgangssignal vom Signalpegel auf seinem zweiten Eingang abhängig und im Ruhezustand leitend ist. Die Sperre ist damit aktiv.

Die Sperranordnung 11 weist für jede Spaltenleitung 12 einen Transistor 14 auf, dessen gesteuerte Strecke die Spaltenleitung mit einem vorgegebenen Potential $U_{SS}$ verbindet. Ist der Transistor 14 leitend, so wirkt die Sperre. Ist dagegen der Transistor 14 gesperrt, so ist die zugehörige Spaltenleitung 12 freigegeben.

Um die Sperre für eine Code-Daten-Adresse aufzuheben, muß ein "freies", d. h. noch gelöschtes Bit im Zählspeicher 4 adressiert sein. Dies wird über das Oder-Gatter 7 durch das Setzen der Kippstufe 8, die hier aus einem RS-Flip-Flop besteht, registriert.

Die Zeitstufe 9 wird durch ein Signal Z angestoßen, wenn sowohl die Kippstufe 8 über die Adressierung eines freien Bits (logisch 1) im Zählspeicher 4 gesetzt wurde, als auch dieses Bit anschließend nach log-0 geschrieben wurde. Bei einem unerlaubten Wechsel des adressierten Zählerbits wird über eine Leitung 15 vom Ausgang des Adreßzählers 6 die Kippstufe 8 sofort zurückgesetzt. Aufgrund der logischen Verknüpfung des Ausgangssignals der Kippstufe 8 mit dem negierten Ausgangssignal des Oder-Gliedes 7 und des Signals Z in einem UND-Glied 16, über dessen Ausgang das Zeitglied 9 angestoßen wird, wird dieses daraufhin sofort in einen sicheren Zustand zurückgesetzt, in welchem über das NOR-Glied 10 die Sperranordnung 11 gesperrt wird.

Im anderen Fall schaltet die Zeitstufe 9 über das NOR-Glied 10 und die Transistoren 14 während der vorgegebenen Schaltphase die Spaltenleitungen 12 frei.

Die Zeitstufe 9 wird also indirekt über den Zählspeicher 4 und die nachgeschalteten Komponenten über ein Adreßsignal des Datenspeichers 3 getriggert, wenn die oben beschriebenen Voraussetzungen erfüllt sind. Innerhalb des durch die Zeitstufe 9 festgelegten Zeitfensters sind dann die Speicherausgänge freigegeben, während sie außerhalb des Zeitfensters unabhängig vom Inhalt des Datenspeichers 2 auf dem vorgegebenen Potential liegen.

Die Zeitstufe 9 besteht hier im Beispiel aus einer monostabilen Kippstufe, deren Rückflanke das Ende des Zeitraums festlegt, innerhalb dessen die Ausgänge des Datenspeichers 2 freigegeben sind. Dieser Zeitraum ist nicht länger, als für einen einzigen Datenvergleich notwendig ist. Das heißt mit anderen Worten, daß die Zeitkonstante der Zeitstufe 9 zur Festlegung des Zeitfensters gerade so bemessen ist, daß das in einem Speicherplatz abgelegte Codewort über die Peripherie- und Komparatorlogik 3 mit Referenzdaten verglichen werden kann. Diese Referenzdaten können im Beispiel der Chip-Karte eine persönliche Identifikationsnummer des Karteninhabers oder etwas Ähnliches darstellen.

Mit 17 ist eine interne Zeitfenstersteuerung bezeichnet, die den Beginn des Bewertungszeitraums festlegt. Wegen des UND-Gliedes 16 ist die Zeitstufe 9 erst triggerbar, wenn das Ausgangssignal Z der Zeitfenstersteuerung 14 einen log-1-Pegel annimmt. Die Generierung des Signals Z ist beispielsweise dann einfach zu realisieren, wenn die Zeitfenstersteuerung aus einem Zufallsgenerator besteht. Die Zeitfenstersteuerung ist von der Peripherie- und Komparatorlogik 13 auf den Zeitablauf der Datenvergleichsoperation synchronisiert.

Diese Synchronisierung erfolgt über ein Triggersignal auf einer Leitung 20, die zur Unterscheidung vom nachfolgend erläuterten Beispiel gestrichelt dargestellt ist.

In einem alternativen Ausführungsbeispiel wird der Triggerimpuls für die Zeitfenstersteuerung 17 über Leitung 26 vom Ausgangssignal des ODER-Gliedes 7 abgeleitet.

Die Zeitfenstersteuerung 17 arbeitet in beiden Fällen folgendermaßen: Von einem Zufallsgenerator 19 wird eine Zählervorgabe in einem Register 18 abgelegt. Nach einem Triggerimpuls (entweder über Leitung 26 oder Leitung 20) startet ein Zähler 27, der so lange inkrementiert wird, bis sein Zählerstand der Zählervorgabe entspricht. Daraufhin wird das Signal Z ausgegeben.

Das Ausgangssignal der Zeitstufe 9 wird sowohl der Sperranordnung 11 als auch der Peripherie- und Komparatorlogik 13 zugeführt. In der Peripherie- und Komparatorlogik 13 dient dieses Signal dazu, das Zeitfenster zur Durchführung des gewünschten Datenvergleichs zu triggern.

Fig. 2 zeigt ein drittes Beispiel zur Ausbildung einer Zeitfenstersteuerung 17'. In diesem Beispiel ist ein nicht vorhersagbarer Start der Zeitstufe 9 von der Schreibdauer einer Speicherzelle im Zählspeicher 4 folgendermaßen abhängig:

Nach dem Detektieren eines freien Bits im Zählspeicher 4 wird die Kippstufe 8 gesetzt. Dadurch wird über ein Monoflop 21 auch ein weiteres Flip-Flop 22 gesetzt, dessen Q-Ausgang auf die Peripherie- und Komparatorlogik 13 geführt ist.

Aufgrund dieses Signals wird eine Schreiboperation gestartet, in der - wie oben bereits beschrieben - in die betreffende freie Speicherzelle des Zählspeichers 4 geschrieben wird.

Zum Einschreiben wird der Steuereingang der betreffenden Speicherzelle von der Peripherie- und Steuerlogik 13 mit Rechteckimpulsen beaufschlagt. Wie Fig. 2 schematisch zeigt, werden diese Rechteckimpulse so lange über ein UND-Glied 24 angelegt, wie an dessen zweiter Eingang ein log-1-Pegel auf Leitung 23 liegt. Jeder Rechteckimpuls bewirkt einen stufenartigen Anstieg der Schwellspannung der Speicherzelle. Sobald die Schwellspannung eine vorgegebene Referenzspannung erreicht, ist die Schreiboperation beendet. Die Schwellspannung wird jeweils in der Zeit zwischen den Rechteckimpulsen gemessen. Dieses Verfahren, die Schreibdauer einer Speicherzelle zu messen, ist in der DE-OS 28 28 855 und der korrespondierenden US-PS 4 279 024 (= VPA 78 P 1110) beschrieben.

Wenn der Schreibvorgang beendet ist, ändert sich das Ausgangssignal des ODER-Gliedes 7 von log-1 auf log-0. Dadurch wird über den Rücksetzeingang R das Flip-Flop 22 zurückgesetzt, was zur Folge hat, daß über den Q̄-Ausgang das Signal Z erzeugt und über das UND-Glied 16 das Zeitglied 9 getriggert wird. Gleichzeitig sperrt das UND-Glied 24 alle weiteren Rechteckimpulse.

Da die Speicherzellen des Zählspeichers 4 hinsichtlich der für die Schreiboperation relevanten Eigenschaften innerhalb eines Toleranz-Spektrums unterschiedlich sind, unterliegen auch die Schreibzeiten einer nicht vorher bestimmbaren Streuung. Dies gilt nicht nur für Speicherzellen auf einem Chip, sondern auch für Speicherzellen auf verschiedenen Chips.

**Patentansprüche**

1. Verfahren zum Sichern von in einem in einer monolithisch integrierten Schaltung enthaltenen Datenspeicher abgelegten geheimen Codedaten vor einer Analyse, bei welcher aus den Signalen an den Speicherausgängen auf den Speicherinhalt geschlossen werden kann, wobei durch eine Anordnung die Übernahme der Codedaten aus dem Datenspeicher (2) in eine ebenfalls in besagter monolithisch integrierter Schaltung enthaltene Peripherielogik (13) auf einen vorgegebenen Zeitraum beschränkt wird, dadurch gekennzeichnet, daß der Anfang dieses Zeitraumes nach außen nicht erkennbar festgelegt ist und daß die besagte Anordnung unmittelbar am Speicherausgang wirksam ist.

2. Verfahren nach Anspruch 1, dadurch gekennzeichnet, daß der Anfang des Zeitraums durch das Schreiben einer Speicherzelle in einem Zählspeicher (4) eingeleitet wird.

3. Verfahren nach Anspruch 1 oder 2, dadurch gekennzeichnet, daß zu Beginn des Zeitraums eine monostabile Kippstufe gestartet wird, deren Rückflanke das Ende des Zeitraums festlegt.

4. Verfahren nach einem der vorhergehenden Ansprüche, dadurch gekennzeichnet, daß mit jeder Datenadresse des Datenspeichers (2) ein die Adressierung registrierender Zählspeicher (4) adressiert wird.

5. Verfahren nach einem der vorhergehenden Ansprüche, dadurch gekennzeichnet, daß zur Sperrung der Datenübernahme vom Datenspeicher (2) zur Peripherielogik (13) die Ausgangsleitungen des Datenspeichers (12) auf ein festes Potential unabhängig von den Daten des Datenspeichers (2) geschaltet wird.

6. Verfahren nach einem der Ansprüche 2 bis 5, dadurch gekennzeichnet, daß der Schreibzustand des Zählspeichers (5) ein entladener Zustand der zugehörigen Speicherzellen ist.

7. Verfahren nach einem der vorhergehenden Ansprüche, dadurch gekennzeichnet, daß gemeinsam mit Datenspeicher (2) und Zählspeicher (4) ein Kennspeicher (3) adressiert wird, und daß die Sperrung der Datenübernahme vom Datenspeicher (2) zur Peripherielogik (13) von der Speicherinformation im Kennspeicher (3) abhängt.

8. Verfahren nach einem der vorhergehenden Ansprüche, dadurch gekennzeichnet, daß der Zeitraum so bemessen ist, daß nur ein einziger Datenvergleich durchführbar ist.

9. Verfahren nach einem der vorhergehenden Ansprüche, dadurch gekennzeichnet, daß der Anfang des Zeitraums durch eine chipinterne Steuerung und nach außen nicht erkennbar festgelegt ist.

10. Integrierte Schaltung mit einem Datenspeicher (2), mit einer ein Zeitfenster festlegenden Zeitstufe (9) und mit einer Sperranordnung (11) welche von der Zeitstufe (9) angesteuert wird zur Durchführung des Verfahrens nach Anspruch 1, dadurch gekennzeichnet, daß die Ausgänge des Datenspeichers (2) an der Sperranordnung (11) liegen, daß die Zeitstufe (9) zumindest indirekt über ein Adreßsignal des Datenspeichers (2) triggerbar ist, daß innerhalb des Zeitfensters die Datenspeicherausgänge durch die Sperranordnung (11) freigegeben und außerhalb des Zeitfensters auf ein vorgegebenes Potential unabhängig vom Inhalt des Datenspeichers (2) gelegt sind.

11. Schaltung nach Anspruch 10, **dadurch gekennzeichnet**, daß die Zeitstufe (9) aus einer monostabilen Kippstufe besteht.

12. Schaltung nach Anspruch 10 oder 11, **dadurch gekennzeichnet**, daß die Sperranordnung (11) an jedem Speicherausgang einen Transistor (14) aufweist, dessen gesteuerte Strecke den zu schützenden Speicherausgang mit einem vorgegebenen Potential verbindet.

13. Schaltung nach einem der Ansprüche 10 bis 12, **dadurch gekennzeichnet**, daß parallel zum Datenspeicher (2) ein die Anzahl der Adressierungen des Datenspeichers (2) registrierender Zählspeicher (4) liegt, der über ein, einen Zählerüberlauf anzeigendes Verknüpfungsglied mit dem Triggereingang der Zeitstufe (9) verbunden ist.

14. Schaltung nach Anspruch 13, **dadurch gekennzeichnet**, daß der Zählspeicher (4) von einem Adreßzähler (6) beaufschlagt ist.

15. Schaltung nach Anspruch 13 oder 14, **gekennzeichnet** durch eine Kippstufe (8), deren Setzeingang zumindest mittelbar vom Zählspeicher (4) und deren Rücksetzeingang vom Adreßzähler (6) beaufschlagt sind, und deren Ausgang zur Zählstufe (9) führt.

16. Schaltung nach einem der Ansprüche 10 bis 15, **dadurch gekennzeichnet**, daß parallel zum Datenspeicher (2) ein Kennspeicher (3) liegt, über dessen Ausgang die Sperranordnung (11) aktivierbar bzw. deaktivierbar ist.

17. Schaltung nach einem der Ansprüche 10 bis 16, **gekennzeichnet** durch eine interne Zeitfenstersteuerung (14) am Eingang der Zeitstufe (9).

18. Schaltung nach Anspruch 17, **dadurch gekennzeichnet**, daß die Zeitfenstersteuerung (14) aus einem Zufallsgenerator besteht.

19. Verfahren nach Anspruch 9, **dadurch gekennzeichnet** daß der Anfang des Zeitraums von einem Zufallsgenerator (19) festgelegt wird.

20. Verfahren nach Anspruch 9, **dadurch gekennzeichnet**, daß der Anfang des Zeitraums von der Schreibdauer einer Speicherzelle des Zählspeichers (4) abhängig ist.

## Claims

1. Method for protecting secret code data stored in a data memory contained in a monolithic integrated circuit from an analysis in which it is possible to form conclusions as to the memory content from the signals at the memory outputs, the transfer of the code data from the data memory (2) into a peripheral logic (13), likewise contained in said monolithic integrated circuit, being limited by an arrangement to a predetermined time period, characterized in that the start of this time period is determined so as to be unrecognizable from the outside, and in that said arrangement is effective directly at the memory output.

2. Method according to Claim 1, characterized in that the start of the time period is initiated by the writing of a storage cell in a counting memory (4).

3. Method according to Claim 1 or 2, characterized in that a monostable multivibrator is started at the beginning of the time period, the trailing edge of which multivibrator determines the end of the time period.

4. Method according to one of the preceding claims, characterized in that a counting memory (4) registering the addressing is addressed with every data address of the data memory (2).

5. Method according to one of the preceding claims, characterized in that, for blocking the data transfer from the data memory (2) to the peripheral logic (13), the output lines of the data memory (12) are switched to a fixed potential independently of the data of the data memory (2).

6. Method according to one of Claims 2 to 5, characterized in that the writing state of the counting memory (5) is a discharged state of the corresponding storage cells.

7. Method according to one of the preceding claims, characterized in that an identification memory (3) is jointly addressed with data memory (2) and counting memory (4) and in that the blocking of the data transfer from the data memory (2) to the peripheral logic (13) depends on the storage information in the identification memory (3).

8. Method according to one of the preceding claims, characterized in that the time period is dimensioned in such a way that only a single data comparison can be made.

9. Method according to one of the preceding claims, characterized in that the start of the time period is determined with a control which is internal to the chip and is unrecognizable from the outside.

10. Integrated circuit for carrying out the method according to Claim 1, having a data memory (2), having a time delay stage (9) determining a time window and having a blocking device (11) which is controlled by the time delay stage (9), characterized in that the outputs of the data memory (2) are connected to the blocking device (11), in that the time delay stage (9) can be triggered, at least indirectly, by an address signal of the data memory (2), in that the data memory outputs are released by the blocking device (11), within the time window and, outside the time window, are connected to a predetermined potential, independently of the contents of the data memory (2).

11. Circuit according to Claim 10, characterized in that the time delay stage (9) comprises a monostable multivibrator.

12. Circuit according to Claim 10 or 11, characterized in that the blocking device (11) has at each memory output a transistor (14), the controlled path of which connects the memory output to be protected to a predetermined potential.

13. Circuit according to one of Claims 10 to 12, characterized in that lying parallel to the data memory (2) is a counting memory (4) registering the number of addressings of the data memory (2), which counting memory (4) is connected to the trigger input of the time delay stage (9) via a gating stage indicating a counter overflow.

14. Circuit according to Claim 13, characterized in that the counting memory (4) is acted upon by an address counter (6).

15. Circuit according to Claim 13 or 14, characterized by a multivibrator (8), the set input of which is acted upon, at least indirectly, by the counting memory (4), and the reset input of which is acted upon by the address counter (6), and the output of which leads to the counting stage (9).

16. Circuit according to one of Claims 10 to 15, characterized in that lying parallel to the data memory (2) is an identification memory (3), via the output of which the blocking device (11) can be activated or deactivated.

17. Circuit according to one of Claims 10 to 16, characterized by an internal time window control (14) at the input of the time delay stage (9).

18. Circuit according to Claim 17, characterized in that the time window control (14) comprises a random generator.

19. Method according to Claim 9, characterized in that the start of the time period is determined by a random generator (19).

20. Method according to Claim 9, characterized in that the start of the time period depends on the writing period of a storage cell of the counting memory (4).

## Revendications

1. Procédé pour protéger, vis-à-vis d'une analyse, des données de code secrètes mémorisées dans une mémoire de données contenue dans un circuit intégré monolithique, et selon lequel on peut, à partir des signaux présents sur les sorties de la mémoire, en déduire le contenu de cette dernière, la prise en charge des données de code tirées de la mémoire de données (2) dans une unité logique périphérique (13) contenue également dans ledit circuit intégré monilithique, étant limitée par un dispositif à un intervalle de temps prédéterminé, caractérisé par le fait que le début de cet intervalle de temps est fixé de manière à ne pas pouvoir être identifié de l'extérieur et que ledit dispositif agit directement sur la sortie de la mémoire.

2. Procédé suivant la revendication 1, caractérisé par le fait que le début de l'intervalle de temps est déclenché par l'enregistrement d'une ligne de mémoire dans une mémoire de comptage (4).

3. Procédé suivant la revendication 1 ou 2, caractérisé par le fait qu'un étage à bascule monostable, dont le flanc arrière du signal fixe la fin de l'intervalle de temps, est déclenché au début de cet intervalle de temps.

4. Procédé suivant l'une des revendications précédentes, caractérisé par le fait qu'une mémoire de comptage (4), qui enregistre l'adressage, est adressée par chaque adresse de données de la mémoire de données (2).

5. Procédé suivant l'une des revendications précédentes, caractérisé par le fait que pour le blocage du transfert de données depuis la mémoire de données (2) en direction de l'unité logique périphérique (13), les lignes de sortie de la mémoire de données (12) sont commutées sur un potentiel fixe, indépendamment des données de la mémoire de données (2).

6. Procédé suivant l'une des revendications 2 à 5, caractérisé par le fait que l'état d'enregistrement dans la mémoire de comptage (5) est un état déchargé des cellules de mémoire associées.

7. Procédé suivant l'une des revendications précédentes, caractérisé par le fait qu'une mémoire d'identification (3) est adressée en commun avec la mémoire de données (2) et la mémoire de comptage (4), et que le blocage du transfert des données depuis la mémoire de données (2) à l'unité logique périphérique (13) dépend de l'information contenue dans la mémoire d'identification (3).

8. Procédé suivant l'une des revendications précédentes, caractérisé par le fait que l'intervalle de temps est dimensionné de manière que seule une comparaison unique de données peut être exécutée.

9. Procédé suivant l'une des revendications précédentes, caractérisé par le fait que le début de l'intervalle de temps est fixé par une commande interne à la microplaquette et ne peut pas être identifié de l'extérieur.

10. Circuit intégré comportant une mémoire de données (2), un étage de commande temporelle (9) déterminant un créneau temporel, et un dispositif de blocage (11), qui est commandé par l'étage de commande temporelle (9), pour la mise en œuvre du procédé suivant la revendication 1, caractérisé par le fait que les sorties de la mémoire de données (2) sont raccordées au dispositif de blocage (11), que l'étage de commande temporelle (9) peut être déclenché au moins de façon indirecte par l'intermédiaire d'un signal d'adresse de la mémoire de données (2), qu'à l'intérieur du créneau temporel, les sorties de la mémoire de données sont libérées par le dispositif de blocage (11) et qu'à l'extérieur du créneau temporel, les sorties de la mémoire de données sont placées à un potentiel prédéterminé, indépendamment du contenu de la mémoire de données (2).

11. Circuit suivant la revendication 10, caractérisé par le fait que l'étage de commande temporelle (9) est constitué par un étage à bascule monostable.

12. Circuit suivant la revendication 10 ou 11, caractérisé par le fait que le dispositif de blocage (11) comporte, au niveau de chaque sortie de la mémoire, un transistor (14), dont la voie commandée relie la sortie de la mémoire, qui doit être protégée, à un potentiel prédéterminé.

13. Circuit suivant l'une des revendications 10 à 12, caractérisé par le fait qu'en parallèle avec la mémoire de données (2) est disposée une mémoire de comptage (4), qui enregistre le nombre des adressages de la mémoire de données (2) et qui est reliée à l'entrée de déclenchement de l'étage de commande temporelle (9), par l'intermédiaire d'un circuit combinatoire indiquant un dépassement de capacité du compteur.

14. Circuit suivant la revendication 13, caractérisé par le fait que la mémoire de comptage (4) est chargée par un compteur d'adresses (6).

15. Circuit suivant la revendication 13 ou 14, caractérisé par un étage à bascule (8), dont l'entrée de positionnement peut être chargée au moins d'une manière indirecte par la mémoire de comptage (4) et dont l'entrée de remise à l'état initial peut être chargée par le compteur d'adresses (6) et dont la sortie est raccordée à l'étage de comptage (9).

16. Circuit suivant l'une des revendications 10 à 15, caractérisé par le fait qu'en parallèle avec la mémoire de données (2) est branchée une mémoire d'identification (3), au moyen du signal de sortie de laquelle le dispositif de blocage (11) peut être activé ou désactivé.

17. Circuit suivant l'une des revendications 10 à 16, caractérisé par une unité interne (14) de commande du créneau temporel, raccordé à l'entrée de l'étage de commande temporelle (9).

18. Circuit suivant la revendication 17, caractérisé par le fait que l'unité (14) de commande du créneau temporel est constituée par un générateur de signaux aléatoires.

19. Procédé selon la revendication 9, caractérisé par le fait que le début de l'intervalle de temps est fixé par un générateur de signaux aléatoires (19).

20. Procédé suivant la revendication 9, caractérisé par le fait que le début de l'intervalle de temps dépend de la durée d'enregistrement d'une ligne de la mémoire de comptage (4).

FIG 1

FIG 2